# EUROPEAN PATENT APPLICATION

(11) **EP 3 764 294 A1**
(43) Date of publication of application: **13.01.2021**
(21) Application number: 18908495.7
(22) Date of filing: 06.03.2018
(51) Int. Cl.: G06Q 10/06

(54) **TRACEABILITY MANAGEMENT DEVICE, TRACEABILITY MANAGEMENT METHOD, AND TRACEABILITY MANAGEMENT PROGRAM**

(71) Applicant: Mitsubishi Electric Corporation, Tokyo 100-8310 (JP)
(72) Inventor: OKA, Aiko, Tokyo 100-8310 (JP)
(74) Representative: Sajda, Wolf E.
(86) International application number: PCT/JP2018/008435
(87) International publication number: WO 2019/171445

(57) **Abstract**

An element count identification unit (22), for a target element which is each constituent element of a deliverable generated in each phase of a development phase, identifies, as a relation count, a count of constituent elements related to the target element, also being a count of constituent elements of a deliverable generated in an adjacent phase. A granularity determination unit (23), for a target deliverable which is a deliverable generated in each phase, compares the relation count concerning each constituent element of the target deliverable, the relation count being identified by the element determination unit (22), with a threshold, to determine whether or not a granularity of a constituent element concerning the target deliverable is appropriate.

## Description

### Technical Field

The present invention relates to a technique of constructing traceability between constituent elements of deliverables in product development of software and the like.

### Background Art

In software development, diversion development is sometimes performed in which software that was developed in the past is diverted. In this case, it is necessary to visualize an extent of influence which requirement change in an upstream design phase exerts on software function specifications and a source code in a downstream phase. By visualizing the extent of influence, designing in an upstream phase can be performed in consideration of an influence on the downstream phase.

This visualization technology is called traceability technology. In the traceability technology, specifically, per constituent element constituting a deliverable, a correspondence relationship with respect to a constituent element of a deliverable of an adjacent phase is identified.

Along with an increase in software development scale and repeated diversion development, cases where deliverables have strong dependencies with each other are increasing. In this case, sometimes it may be difficult to identify a specification range in a downstream document that is influenced by requirement modification of an upstream document.

Patent Literature 1 describes a technique of associating deliverables of a plurality of phases with each other and performing adaptability checking and validity verification.

### Citation List

### Patent Literature

Patent Literature 1: JP 2014-137748 A

### Summary of the Invention

### Technical Problem

With the traceability technology, the correspondence relationship is identified in units of constituent elements constituting a deliverable. The technique described in Patent Literature 1 does not indicate a guideline concerning granularity of a constituent element. To set the granularity of the constituent element, determination by a developer is required.

The finer the granularity of a constituent element, the more precisely an influence on a downstream side can be identified in a case of requirement change. On the other hand, if the granularity of the constituent element is excessively fine, identification of a correspondence relationship requires a lot of time. For this reason, the developer sets a granularity of a constituent element such that the correspondence relationship can be maintained. If, however, the granularity of the constituent element is excessively coarse, it will influence a downstream phase excessively widely. Then, it is difficult to identify the influence extent.

An objective of the present invention is to support construction of traceability with an appropriate constituent element granularity.

### Solution to the Problem

A traceability management device according to the present invention includes:
an element count identification unit, for a target element which is each constituent element of a deliverable generated in each phase of a development phase, to identify, as a relation count, a count of constituent elements related to the target element, also being a count of constituent elements of a deliverable generated in an adjacent phase; and
a granularity determination unit, for a target deliverable which is a deliverable generated in said each phase, to compare the relation count concerning each constituent element of the target deliverable, the relation count being identified by the element count identification unit, with a threshold, to determine whether or not a granularity of a constituent element concerning the target deliverable is appropriate.

### Advantageous Effects of the Invention

According to the present invention, whether or not a granularity of a constituent element in a deliverable is appropriate is determined based on a count of constituent elements, related to each constituent element, of a deliverable generated in an adjacent phase. This makes it possible to correct the granularity of the constituent element, and to construct traceability with an appropriate constituent element granularity.

### Brief Description of the Drawings

- FIG. 1: is a configuration diagram of a traceability management device 10 according to Embodiment 1.
- FIG. 2: is a flowchart illustrating an overall behavior of the traceability management device 10 according to Embodiment 1.
- FIG. 3: is a diagram illustrating a traceability table 31 according to Embodiment 1.
- FIG. 4: is a diagram illustrating a relation count table 32 according to Embodiment 1.
- FIG. 5: is a flowchart of a granularity determination process according to Embodiment 1.
- FIG. 6: is a configuration diagram of a traceability management device 10 according to Modification 2.
- FIG. 7: is a configuration diagram of a traceability management device 10 according to Embodiment 2.
- FIG. 8: is a flowchart of a learning process according to Embodiment 2.

### Description of Embodiments

### Embodiment 1.

### Description of Configuration

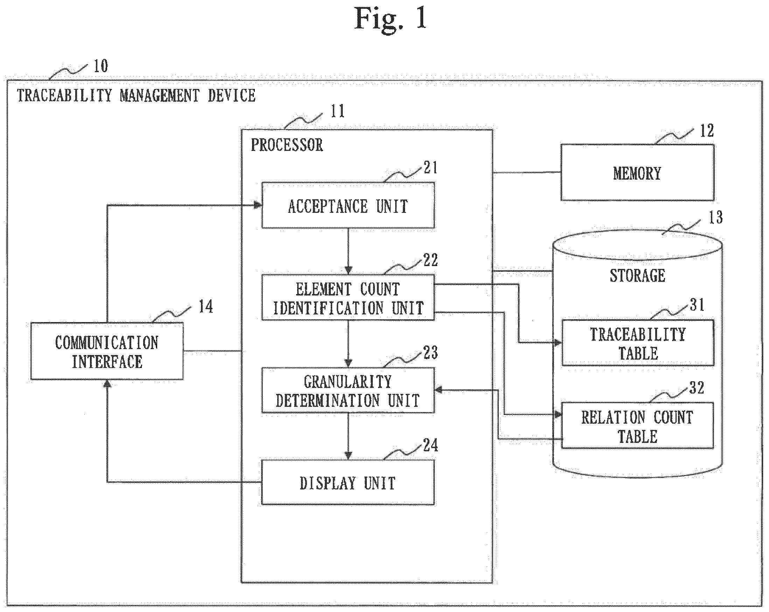

A configuration of a traceability management device 10 according to Embodiment 1 will be described with referring to FIG. 1.

The traceability management device 10 is a computer.

The traceability management device 10 is provided with hardware devices, namely, a processor 11, a memory 12, a storage 13, and a communication interface 14. The processor 11 is connected to the other hardware devices via signal lines and controls these other hardware devices.

The processor 11 is an Integrated Circuit (IC) which performs processing. Specific examples of the processor 11 are a Central Processing Unit (CPU), a Digital Signal Processor (DSP), and a Graphics Processing Unit (GPU).

The memory 12 is a storage device that stores data temporarily. Specific examples of the memory 12 are a Static Random Access Memory (SRAM) and a Dynamic Random Access Memory (DRAM).

The storage 13 is a storage device which stores data. A specific example of the storage 13 is a Hard Disk Drive (HDD). The storage 13 may be a portable recording medium such as a Secured Digital (SD; registered trademark) memory card, a CompactFlash (registered trademark; CF), a NAND flash, a flexible disk, an optical disk, a compact disk, a blu-ray (registered trademark) disk, and a Digital Versatile Disk (DVD).

The communication interface 14 is an interface employed to communicate with an external device. Specific examples of the communication interface 14 are an Ethernet (registered trademark) port, a Universal Serial Bus (USB) port, and a High-Definition Multimedia Interface (HDMI; registered trademark) port.

The traceability management device 10 is provided with an acceptance unit 21, an element count identification unit 22, a granularity determination unit 23, and a display unit 24, as function constituent elements. Functions of the function constituent elements of the traceability management device 10 are implemented by software.

A program that implements the functions of the function constituent elements of the traceability management device 10 is stored in the storage 13. This program is read into the memory 12 by the processor 11 and executed by the processor 11. Thus, the functions of the function constituent elements of the traceability management device 10 are implemented.

The storage 13 stores a traceability table 31 and a relation count table 32.

FIG. 1 illustrates only one processor 11. However, a plurality of processor 11 may be provided. The plurality of processors 11 cooperate with each other to execute the program that implements the functions.

### Description of Operations

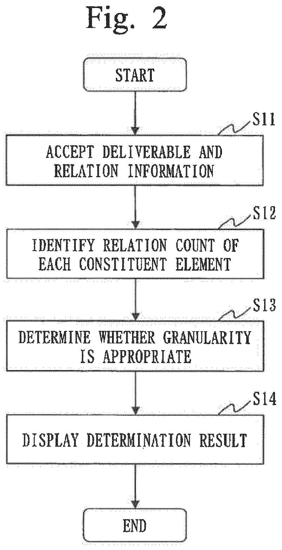

Operations of the traceability management device 10 according to Embodiment 1 will be described with referring to FIGS. 2 to 5.

The operations of the traceability management device 10 according to Embodiment 1 correspond to a traceability management method according to Embodiment 1. The operations of the traceability management device 10 according to Embodiment 1 also correspond to processing of a traceability management program according to Embodiment 1.

In Embodiment 1, a description will be made on an assumption that a development phase of a product such as software consists of three phases, namely, an upstream design phase, a downstream design phase, and an implementation phase.

In Embodiment 1, assume that the upstream design phase generates an upstream document as a deliverable, the downstream design phase generates a downstream document as a deliverable. and the implementation phase generates a source code as a deliverable.

An overall behavior of the traceability management device 10 according to Embodiment 1 will be described with referring to FIG. 2.

### Step S11: Accepting Process

The acceptance unit 21 accepts, as input, a deliverable generated in each phase of the development phase, and relation information indicating a correspondence relationship with constituent elements in a deliverable generated in an adjacent phase.

Specifically, the acceptance unit 21 accepts, via the communication interface 14, the deliverables and the relation information which are inputted by a developer or the like via an input device. In this context, the acceptance unit 21 accepts: the deliverable of the upstream document, the deliverable of the downstream document, and the deliverable of the source code; first relation information indicating a correspondence relationship between constituent elements in the upstream document and constituent elements in the downstream document; and second relation information indicating a correspondence relationship between the constituent elements in the downstream document and constituent elements in the source code.

The acceptance unit 21 writes; the upstream document, downstream document, and source code; and the first relation information and the second relation information, to the memory 12.

Specific examples of the constituent elements in the upstream document are product functions. Specific examples of the constituent elements in the downstream document are software requirements and control operations. Specific examples of the constituent elements in the source code are functions.

The relation information may be information embedded in a constituent element of each deliverable and indicating a corresponding constituent element in an adjacent deliverable. Alternatively, the relation information may be information prepared independently of the deliverable and indicating a corresponding constituent element.

### Step S12: Element Count Identification Process

The element count identification unit 22, for a target element which is each constituent element of a deliverable generated in each phase of the development phase, identifies, as a relation count, a count of constituent elements related to the target element, also being a count of constituent elements of a deliverable generated in an adjacent phase.

In this context, the element count identification unit 22, for a target phase which is each phase, and for a target element which is each constituent element of a deliverable generated in the target phase, identifies, as an upstream relation count, a count of constituent elements related to the target element, also being a count of constituent elements of a deliverable generated in an upstream phase adjacent to the target phase.

The element count identification unit 22 also identifies, as a downstream relation count, a count of constituent elements related to the target element, also being a count of constituent elements of a deliverable generated in a downstream phase adjacent to the target phase.

Specifically, the element count identification unit 22 reads out: the upstream document, the downstream document, and the source code; and the first relation information and the second relation information, from the memory 12.

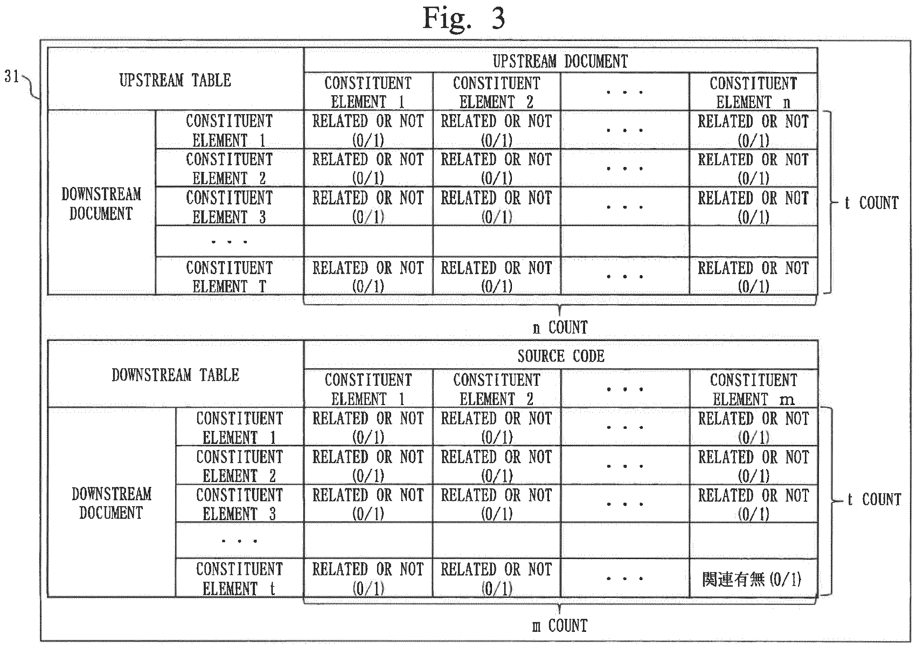

The element count identification unit 22 extracts the constituent elements from each deliverable and writes down the extracted constituent elements in the traceability table 31. In this context, as illustrated in FIG. 3, the traceability table 31 includes an upstream table and a downstream table. In the upstream table, the constituent elements of the upstream document are assigned to columns, and the constituent elements of the downstream documents are assigned to rows.

In the downstream table, the constituent elements of the downstream document are assigned to rows, and the constituent elements of the source code are assigned to columns.

The element count identification unit 22 writes down the constituent elements extracted from the upstream document, in the columns of the upstream table. The element count identification unit 22 writes down the constituent elements extracted from the downstream document, in the rows of the upstream table and the rows of the downstream table. The element count identification unit 22 writes down the constituent elements extracted from the source code, in the columns of the downstream table.

Assume that **n** of constituent elements are extracted from the upstream document, **t** of constituent elements are extracted from the downstream document, and **m** of constituent elements are extracted from the source code.

The element count identification unit 22 determines whether or not a correspondence relationship exists between the constituent elements of deliverables of adjacent phases. In this context, the element count identification unit 22 determines whether or not a correspondence relationship exists between each constituent element of the upstream document and each constituent element of the downstream document, and whether or not a correspondence relationship exists between each constituent element of the downstream document and each constituent element of the source code.

Then, the element count identification unit 22 writes down 1 in a target field of the traceability table 31 if a correspondence relationship exists, and writes down 0 in a target field of the traceability table 31 if a correspondence relationship does not exist. A target field is a field where a row and a column of target constituent elements intersect.

The element count identification unit 22, referring to the upstream table of the traceability table 31, for a target which is each constituent element extracted from the upstream document, identifies, as a downstream relation count, a count of constituent elements of the downstream document which have a correspondence relationship with the target constituent element. Likewise, the element count identification unit 22, referring to the downstream table of the traceability table 31, for a target which is each constituent element extracted from the downstream document, identifies, as a downstream relation count, a count of constituent elements of the source code which have a correspondence relationship with the target constituent element.

Also, the element count identification unit 22, referring to the upstream table of the traceability table 31, for a target which is each constituent element extracted from the downstream document, identifies, as an upstream relation count, a count of constituent elements of the upstream document which have a correspondence relationship with the target constituent element. Likewise, the element count identification unit 22, referring to the downstream table of the traceability table 31, for a target which is each constituent element extracted from the source code, identifies, as an upstream relation count, a count of constituent elements of the downstream document which have a correspondence relationship with the target constituent element.

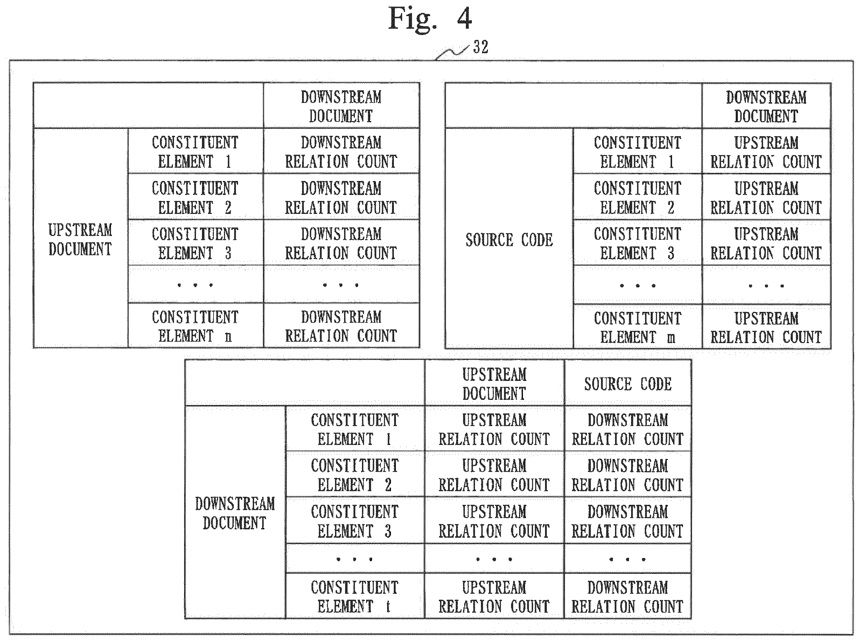

As illustrated in FIG. 4, the element count identification unit 22 writes down the downstream relation count and upstream relation count identified concerning each constituent element, in the relation count table 32. Consequently, the downward relation count concerning each of n of constituent elements extracted from the upstream document, the upstream relation count and downstream relation count both concerning each of t of constituent elements extracted from the downstream document, and the upstream relation count concerning each of **m** of constituent elements extracted from the source code, are written in the relation count table 32.

### Step S13: Granularity Determination Process

The granularity determination unit 23, for a target deliverable which is a deliverable generated in each phase, compares the relation count concerning each constituent element of the target deliverable, with a threshold, to determine whether or not a granularity of a constituent element concerning the target deliverable is appropriate. In this context, the granularity determination unit 23 compares the upstream relation count concerning each constituent element of the target deliverable, with a threshold, and compares the downstream relation count concerning each constituent element of the target deliverable, with the threshold, to determine whether or not a granularity of a constituent element concerning the target deliverable is appropriate. The granularity determination unit 23 writes down a determined result in the memory 12.

The granularity determination process will be described later in detail.

### Step S14: Result Display Process

The display unit 24 displays the result determined in step S13.

Specifically, the display unit 24 reads out the determined result from the memory 12. The display unit 24 outputs the determined result to a display device via the communication interface 14 and causes the display device to display the determined result. This prompts correction of the granularity concerning a deliverable whose granularity is determined to be not appropriate.

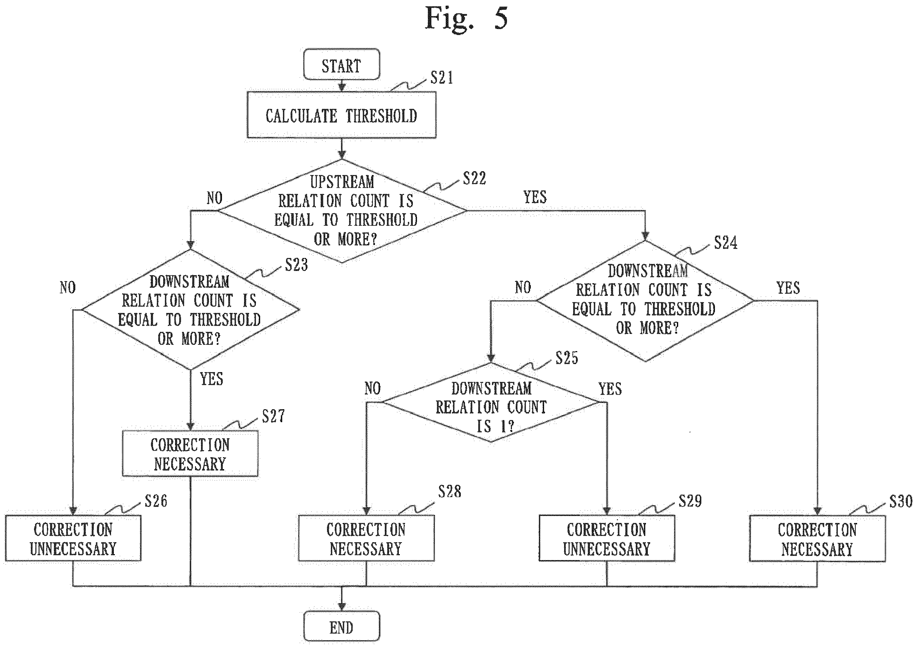

The granularity determination process (step S13 of FIG. 2) according to Embodiment 1 will be described with referring to FIG. 5.

### Step S21: Threshold Calculation Process

The granularity determination unit 23 calculates the threshold based on the relation counts.

In a specific example, the granularity determination unit 23 calculates the threshold by adding an amendment value to an average of the relation counts. In this situation, the granularity determination unit 23 may calculate the threshold by considering not only the relation counts concerning the deliverable for a product which is a processing target, but also considering the relation counts concerning deliverables for products that are past processing targets. For example, the granularity determination unit 23 may calculate the threshold by adding an amendment value to an average of the relation counts concerning a deliverable for a product which has been a processing target.

The granularity determination unit 23 may calculate the threshold by considering a count of constituent elements included in each deliverable for a product which is a processing target. For example, the granularity determination unit 23 may determine the amendment value according to the count of constituent elements. The larger the count of constituent elements, the larger the granularity determination unit 23 may increase the amendment value.

Regarding the threshold, a common value may be set for all the deliverables. Alternatively, different thresholds may be set for different deliverables.

Processes of step S22 to step S30 are executed on, as a target element, each constituent element extracted from each deliverable.

### Step S22: Upstream Determination Process

The granularity determination unit 23 determines whether or not the upstream relation count concerning the target element is equal to the threshold or more.

If the upstream relation count is less than the threshold, the granularity determination unit 23 advances the processing to step S23. If the upstream relation count is equal to the threshold or more, the granularity determination unit 23 advances the processing to step S24.

No upstream relation count exists concerning a constituent element extracted from a most-upstream deliverable. In this case, the granularity determination unit 23 advances the processing to step S23.

### Step S23: First Downstream Determination Process

The granularity determination unit 23 determines whether or not the downstream relation count concerning the target element is equal to the threshold or more.

If the downstream relation count is less than the threshold, the granularity determination unit 23 advances the processing to step S26. If the downstream relation count is equal to the threshold or more, the granularity determination unit 23 advances the processing to step S27.

No downstream relation count exists concerning a constituent element extracted from the most-downstream deliverable. In this case, the granularity determination unit 23 advances the processing to step S26.

### (Step S24: Second Downstream Determination Process)

The granularity determination unit 23 determines whether or not the downstream relation count concerning the target element is equal to the threshold or more.

If the downstream relation count is less than the threshold, the granularity determination unit 23 advances the processing to step S25. If the downstream relation count is equal to the threshold or more, the granularity determination unit 23 advances the processing to step S30.

### Step S25: Relation Count Determination Process

The granularity determination unit 23 determines whether or not the downstream relation count concerning the target element is 1.

If the downstream relation count concerning the target element is not 1, the granularity determination unit 23 advances the processing to step S28. If the downstream relation count concerning the target element is 1, the granularity determination unit 23 advances the processing to step S29.

### Step S26: First Handling Process

Since both the upstream relation count and the downstream relation count are less than the threshold, the granularity determination unit 23 determines that the granularity of the target element is appropriate. In other words, the granularity determination unit 23 determines that with respect to the target element, the granularity need not be corrected.

### Step S27: Second Handling Process

While the upstream relation count is less than the threshold, the downstream relation count is equal to the threshold or more, and the count of related constituent elements in the downstream deliverable is large. Thus, the granularity determination unit 23 determines that the granularity of the target element is not appropriate. In other words, the granularity determination unit 23 determines that the granularity of the target element needs to be decreased since it is large.

### Step S28: Third Handling Process

While the downstream relation count is less than the threshold, the upstream relation count is equal to the threshold or more, and the count of related constituent elements in the upstream deliverable is large. Thus, the granularity determination unit 23 determines that the granularity of the target element is not appropriate. In other words, the granularity determination unit 23 determines that the granularity of the target element needs to be decreased since it is large.

### Step S29: Fourth Handling Process

While the upstream relation count is equal to the threshold or more, the downstream relation count is 1. Thus, the granularity determination unit 23 determines that the target element is an element that is common to many functions and the like. In other words, in software and the like, a common element exists such as a common function used by many functions. The common element is an element that does not have alone a particular meaning, but is related to various constituent elements.

In this case, often, there is only one constituent element that has a correspondence relationship with a downstream deliverable. Hence, when the downstream relation count is 1, even if the upstream relation count is equal to the threshold value or more, the granularity determination unit 23 determines that the granularity of the target element is appropriate. That is, the granularity determination unit 23 determines that concerning the target element, the granularity need not be corrected.

Note that "1" is merely an example. Any value other than "1" will do as far as it can be used to distinguish a common element.

### Step S30: Fifth Handling Process

Both the upstream relation count and the downstream relation count are equal to the threshold or more, and both the count of related constituent elements in the upstream deliverable and the count of related constituent elements in the downstream deliverable are large. Thus, the granularity determination unit 23 determines that the granularity of the target element is not appropriate. In other words, the granularity determination unit 23 determines that the granularity needs to be decreased since it is large.

### Effect of Embodiment 1

As described above, with the traceability management device 10 according to Embodiment 1, it is determined whether or not the granularity of the constituent element in the deliverable is appropriate, based on the count of constituent elements in the deliverable generated in an adjacent phase, which are related to each constituent element. This enables correction of the granularity of the constituent element and construction of a traceability at an appropriate constituent element granularity.

### Other Configurations

### Modification 1

In Embodiment 1, it is assumed that the development phase of a product such as software consists of three phases, namely, the upstream design phase, the downstream design phase, and the implementation phase. However, the development phase may consist of two phases, or four phases or more.

In a case where the development phase consists of four phases, the processing may be performed by regarding the most-upstream phase as the upstream phase in Embodiment 1 and regarding the remaining phases other than the implementation phase as the downstream design phase in Embodiment 1.

In Embodiment 1, a case has been described as an example, where each development phase produces one deliverable. However, each development phase may produce a plurality of deliverables. In this case, the constituent elements are related among the deliverables.

For example, assume that an upstream document 1a and an upstream document 1b are generated in the upstream design phase, and that a downstream document 1, a downstream document 2, and a downstream document 3 are generated in the downstream design phase. In this case, the upstream document 1a and the downstream 1 are related to each other, the upstream document 1a and the downstream document 2 are related to each other, and the upstream document 1a and the downstream document 3 are related to each other. Also, the upstream document 1b and the downstream 1 are related to each other, the upstream document 1b and the downstream document 2 are related to each other, and the upstream document 1b and the downstream document 3 are related to each other.

### Modification 2

In Embodiment 1, the function constituent elements are implemented by software. In Modification 2, the function constituent elements may be implemented by hardware. Modification 2 will now be described regarding its difference from Embodiment 1.

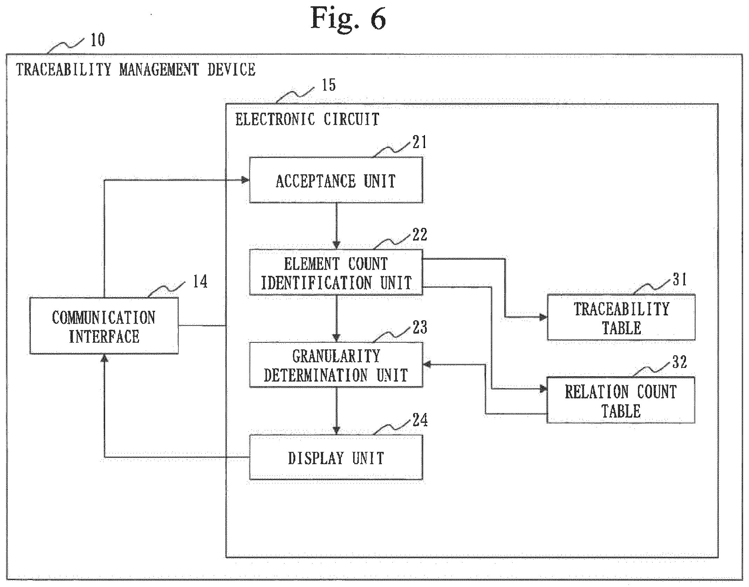

A configuration of a traceability management device 10 according to Modification 2 will be described with referring to FIG. 6.

In a case where the function constituent elements are implemented by hardware, the traceability management device 10 is provided with an electronic circuit 15 in place of the processor 11, the memory 12, and the storage 13. The electronic circuit 15 is a dedicated circuit that implements functions of the function constituent elements, a function of the memory 12, and a function of the storage 13.

The electronic circuit 15 is assumed to be a single circuit, a composite circuit, a programmed processor, a parallel-programmed processor, a logic IC, a Gate Array (GA), an Application Specific Integrated Circuit (ASIC), or a Field-Programmable Gate Array (FPGA).

The function constituent elements may be implemented by one electronic circuit 15. Alternatively, the function constituent elements may be implemented by a plurality of electronic circuit 15 through distribution.

### Modification 3

In Modification 3, some function constituent elements may be implemented by hardware, and the remaining function constituent elements may be implemented by software.

The processor 11, the memory 12, the storage 13, and the electronic circuit 15 are called processing circuitry. That is, the functions of the function constituent elements are implemented by the processing circuitry.

### Embodiment 2.

A relation count concerning a correction deliverable, being a corrected deliverable, is identified, and a difference in relation count between before and after correction is learned as a use case. Embodiment 2 is different from Embodiment 1 in this respect. In Embodiment 2, this difference will be described. Description on the same point will be omitted.

### Description of Configuration

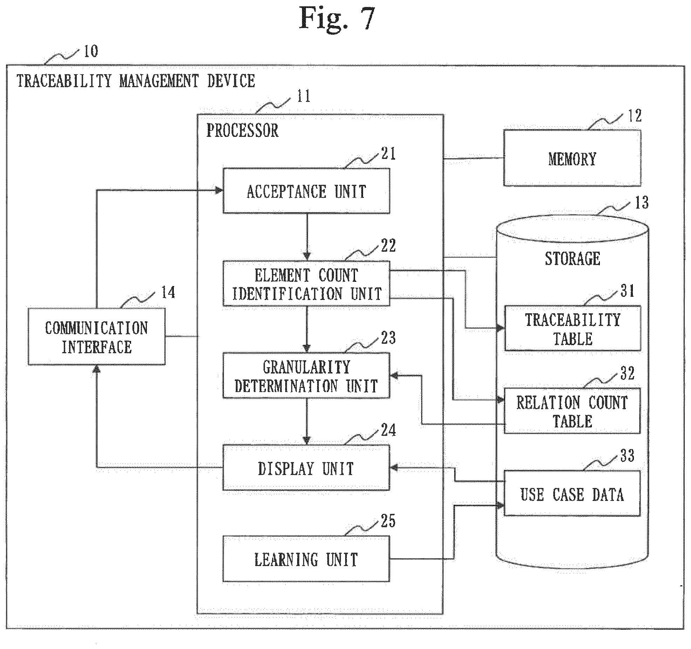

A configuration of a traceability management device 10 according to Embodiment 2 will be described with referring to FIG. 7.

The traceability management device 10 is provided with a learning unit 25, and in this respect is different from the traceability management device 10 illustrated in FIG. 1. Also, in the traceability management device 10, a storage 13 stores use case data 33, and in this respect is different from the traceability management device 10 illustrated in FIG. 1.

### Description of Operations

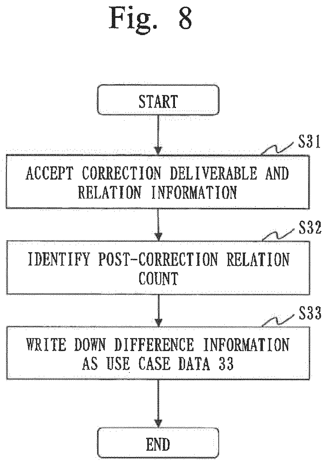

Operations of the traceability management device 10 according to Embodiment 2 will be described with referring to FIGS. 2 and 8.

The operations of the traceability management device 10 according to Embodiment 2 correspond to a traceability management method according to Embodiment 2. The operations of the traceability management device 10 according to Embodiment 2 also correspond to processing of a traceability management program according to Embodiment 2.

An overall behavior of the traceability management device 10 according to Embodiment 2 will now be described with referring to FIG. 2.

Processes of step S11 to step S13 are the same as those in Embodiment 1.

### Step S14: Result Display Process

A display unit 24 displays a result determined in step S13. In this case, the display unit 24 reads out use case data 33 from the storage 13 and displays the readout use case data 33 together with the determined result.

The use case data 33 is written in the storage 13 in a learning process to be described later.

The learning process according to Embodiment 2 will be described with referring to FIG. 8.

The learning process is executed when it is determined that the granularity is not appropriate in step S13 of FIG. 2 and the deliverable is corrected. In this context, the learning process is executed when at least one deliverable out of an upstream document, a downstream document, and a source code is corrected.

### Step S31: Accepting Process

An acceptance unit 21 accepts, as input, a correction deliverable, which is a corrected deliverable, and correction relation information, which is relation information concerning the correction deliverable.

Specifically, the acceptance unit 21 accepts, via a communication interface 14, the correction deliverable and the correction relation information which are inputted by the developer or the like via an input device. In this context, the acceptance unit 21 accepts an upstream document, a downstream document, and a source code which are correction deliverables, and first relation information and second relation information which are correction relation information.

Note that not all of the upstream document, the downstream document, and the source code are necessarily corrected. There may also be a case where the upstream document, the downstream document, and the source code are corrected partly. Even when the upstream document, the downstream document and the source code are corrected partly, the upstream document, the downstream document, and the source code are called post-correction deliverables.

### Step S32: Element Count Identification Process

An element count identification unit 22, for a target element which is each constituent element of the correction deliverable, identifies, as a post-correction relation count, a count of constituent elements related to the target element, being also a count of constituent elements of a deliverable generated in an adjacent phase.

In this context, the element count identification unit 22 identifies, as the post-correction relation count, each of an upstream relation count and a downward relation count, as in step S12 of FIG. 2. Specifically, the element count identification unit 22 generates a traceability table 31 and a relation count table 32 for the correction deliverable as well, as in step S12 of FIG. 2.

### Step S33: Difference Extraction Process

The learning unit 25 collates the traceability table 31 generated in step S32 with the traceability table 31 generated in step S12 of FIG. 2 concerning a pre-correction deliverable, and identifies the difference. Likewise, the learning unit 25 collates the relation count table 32 generated in the relation count table 32 with the relation count table 32 generated in step S12 of FIG. 2 concerning the pre-correction deliverable, and identifies the difference.

The learning unit 25 writes down, in the storage 13, difference information indicating the extracted differences, as the use case data 33. The use case data 33 may include a reason of reconstructing the traceability.

### Effect of Embodiment 2

As described above, the traceability management device 10 according to Embodiment 2 accumulates the difference information of the traceability table 31 of before and after correction and the difference information of the relation count table 32 of before and after the correction, as the use case data 33. Therefore, when it is determined that the granularity is not appropriate, the use case data 33 can be presented as a reference concerning how the deliverable should be corrected.

So far embodiments and modifications of the present invention have been described. Of these embodiments and modifications, some may be practiced in combination. One or some of the embodiments and modifications may be practiced partly. The present invention is not limited to the embodiments and modifications described above, and various changes can be made as necessary.

### List of Reference Signs

- 10: traceability management device
- 11: processor
- 12: memory
- 13: storage
- 14: communication interface
- 15: electronic circuit
- 21: acceptance unit
- 22: element count identification unit
- 23: granularity determination unit
- 24: display unit
- 25: learning unit
- 31: traceability table
- 32: relation count table
- 33: use case data.

## Claims

1. A traceability management device comprising:
- an element count identification unit, for a target element which is each constituent element of a deliverable generated in each phase of a development phase, to identify, as a relation count, a count of constituent elements related to the target element, also being a count of constituent elements of a deliverable generated in an adjacent phase; and
- a granularity determination unit, for a target deliverable which is a deliverable generated in said each phase, to compare the relation count concerning each constituent element of the target deliverable, the relation count being identified by the element count identification unit, with a threshold, to determine whether or not a granularity of a constituent element concerning the target deliverable is appropriate.

2. The traceability management device according to claim 1,
wherein the element count identification unit, for a target phase which is said each phase, and for a target element which is each constituent element of a deliverable generated in the target phase, identifies, as an upstream relation count, a count of constituent elements related to the target element, also being a count of constituent elements of a deliverable generated in an upstream phase adjacent to the target phase, and identifies, as a downstream relation count, a count of constituent elements related to the target element, also being a count of constituent elements of a deliverable generated in a downstream phase adjacent to the target phase, and
wherein the granularity determination unit compares the upstream relation count concerning each constituent element of the target deliverable, with the threshold, and compares the downstream relation count concerning each constituent element of the target deliverable, with the threshold, to determine whether or not a granularity of a constituent element concerning the target deliverable is appropriate.

3. The traceability management device according to claim 2,
wherein the granularity determination determines that the granularity is not appropriate, in a case where the upstream relation count is equal to the threshold or more and the downstream relation count is equal to the threshold or more, in a case where the upstream relation count is less than the threshold and the downstream relation count is equal to the threshold or more, and in a case where the upstream relation count is equal to the threshold or more, the downstream relation count is less than the threshold, and the downstream relation count is not 1.

4. The traceability management device according to any one of claims 1 to 3,
wherein when it is determined by the granularity determination unit that the granularity is not appropriate, the element count identification unit, for a target element which is each constituent element of a correction deliverable, namely a corrected deliverable, identifies, as a post-correction relation count, a count of constituent elements related to the target element, also being a count of constituent elements of a deliverable generated in an adjacent phase, and
wherein the traceability management device further comprises a learning unit to identify difference information indicating a difference between the relation count concerning a pre-correction deliverable and the post-correction relation count concerning the correction deliverable.

5. The traceability management device according to claim 4,
further comprising
a display unit to display a result determined by the granularity determination unit, and the difference information concerning another development phase.

6. A traceability management method comprising:
- by an element count identification unit, for a target element which is each constituent element of a deliverable generated in each phase of a development phase, identifying, as a relation count, a count of constituent elements related to the target element, also being a count of constituent elements of a deliverable generated in an adjacent phase; and
- by a granularity determination unit, for a target deliverable which is a deliverable generated in said each phase, comparing the relation count concerning each constituent element of the target deliverable, with a threshold, to determine whether or not a granularity of a constituent element concerning the target deliverable is appropriate.

7. A traceability management program
which causes a computer to execute:
- an element count identification process, for a target element which is each constituent element of a deliverable generated in each phase of a development phase, of identifying, as a relation count, a count of constituent elements related to the target element, also being a count of constituent elements of a deliverable generated in an adjacent phase; and
- a granularity determination process, for a target deliverable which is a deliverable generated in said each phase, of comparing the relation count concerning each constituent element of the target deliverable, the relation count being identified by the element count identification process, with a threshold, to determine whether or not a granularity of a constituent element concerning the target deliverable is appropriate.
